Europäisches Patentamt

European Patent Office

Office européen des brevets

(19)

(11) Veröffentlichungsnummer: **0 171 354**
**B1**

(12) # EUROPÄISCHE PATENTSCHRIFT

(45) Veröffentlichungstag der Patentschrift:
16.03.88

(51) Int. Cl.⁴: **F 16 B 13/12**

(21) Anmeldenummer: **85810298.1**

(22) Anmeldetag: **26.06.85**

(54) **Spreizdübel.**

(30) Priorität: **09.07.84 DE 3425237**

(43) Veröffentlichungstag der Anmeldung:
**12.02.86 Patentblatt 86/7**

(45) Bekanntmachung des Hinweises auf die Patenterteilung:
**16.03.88 Patentblatt 88/11**

(84) Benannte Vertragsstaaten:
**CH DE FR GB LI**

(56) Entgegenhaltungen:
**WO-A-83/02648**
**DE-C-703 530**
**FR-A-2 273 968**

(73) Patentinhaber: **HILTI Aktiengesellschaft, FL- 9494 Schaan (LI)**

(72) Erfinder: **Herb, Armin, Lärchenstrasse 9, D-8123 Peissenberg (DE)**

(74) Vertreter: **Wildi, Roland, Hilti Aktiengesellschaft Patentabteilung, FL- 9494 Schaan (LI)**

EP 0 171 354 B1

## Beschreibung

Die Erfindung betrifft einen Spreizdübel mit hülsenförmigem Dübelkörper und einem Spreizelement in dessen Zentralbohrung, wobei der Dübelkörper vom einführrichtungsseitigen Ende her Längsschlitze aufweist und durch axiale Verformung des Spreizelementes im Bereich der Längsschlitze radial aufweitbar ist.

Eine an Spreizdübel gestellte Forderung ist deren einfache Setzbarkeit. Diese Forderung wird vor allem von bekannten Spreizdübeln, deren Setzvorgang durch Schlagspreizung erfolgt, erfüllt. Ein solcher Spreizdübel besteht aus einem hülsenförmigen Dübelkörper aus Stahl, mit einer in Setzrichtung über einen einführrichtungsseitigen Abschnitt sich kegelig verjüngenden Zentralbohrung und einem als Zylinderzapfen ausgebildeten Spreizelement, das ebenso beispielsweise aus Stahl besteht. Zur Verspreizung des einführrichtungsseitig längsgeschlitzten Dübelkörpers im Bohrloch eines Aufnahmematerials, wie Beton, Mauerwerk und dergleichen, wird das Spreizelement vorzugsweise unter Schlageinwirkung in den sich verjüngenden Abschnitt der Zentralbohrung vorgetrieben. Ein erheblicher Nachteil dieses Spreizdübels sind dessen hohe Herstellungskosten, die sich einerseits aus grossem Materialaufwand und andererseits aus der aufwendigen Herstellung der sich verjüngenden Zentralbohrung ergeben.

Eine Weiterentwicklung eines derartigen Dübels, dessen Zentralbohrung von zurückgebogenen Teilen des Hülsenkörpers gebildet wird, zeigt die FR-A-2 273 968.

Bekannt ist auch ein auf demselben Verankerungsprinzip basierender Spreizdübel, der sich durch einfachere Herstellbarkeit auszeichnet. Dieser Spreizdübel besteht aus einem hülsenförmigen Dübelkörper mit durchgehend zylindrischer Zentralbohrung und im einführrichtungsseitigen Endbereich vorgesehenen Längsschlitzen. Zur Verankerung des Spreizdübels wird ein in der Zentralbohrung des Dübelkörpers sitzendes Spreizelement aus plastisch verformbarem Material, beispielsweise Blei oder Kunststoff, axial gestaucht. Dies führt zu einer Verspreizung des Dübelkörpers im Bohrloch des Aufnahmematerials. Allerdings erfolgt die radiale Verformung des Dübelkörpers ungleichmässig, da die grösste Verformung an der Stelle mit geringstem aufnahmematerialseitigem Widerstand auftritt. Ein weiteres die Verankerungswerte des Spreizdübels beeinträchtigendes Problem ist durch das auftretende Entweichen von Material des Spreizelementes gegeben, indem dieses beim Stauchvorgang einerseits durch die Längsschlitze auszutreten vermag und andererseits in der Zentralbohrung entgegen der Einführrichtung teilweise wegfliesst. Der Bereich und der Grad der Verformung des Dübelkörpers beim Spreizvorgang ist demnach weitgehend undefiniert.

Der Erfindung liegt die Aufgabe zugrunde, einen einfach zu setzenden Spreizdübel zu schaffen, der sich durch hohe und zuverlässige Verankerungswerte auszeichnet sowie eine kostengünstige Herstellung erlaubt.

Erfindungsgemäss wird die Aufgabe dadurch gelöst, dass das Spreizelement als Wendelkörper ausgebildet ist, dessen Steigung sich bei axialer Verformung unter Vergrösserung der Aussenkontur verkleinert.

Der beispielsweise aus Bandstahl gefertigte Wendelkörper liegt in Ausgangsstellung zweckmässig unter leichter Vorspannung selbsthemmend am Umfang der Zentralbohrung an. Zur Verankerung wird der Wendelkörper des in ein Bohrloch eingeführten Spreizdübels mit Hilfe eines im wesentlichen stiftförmigen Werkzeuges axial gestaucht. Dabei verkleinert sich die Steigung des Wendelkörpers und gleichzeitig vergrössert sich dessen Aussenkontur, was eine radiale Erweiterung des Dübelkörpers zur Folge hat. Für den Verankerungsvorgang kann sich der Wendelkörper am Grund des Bohrloches abstützen. Der Wendelkörper gewährleistet die Erzielung definierter Verankerungswerte, da er aufgrund der Eigenfestigkeit des Materials nicht aus dem Inneren der Zentralbohrung beispielsweise in die Längsschlitze entweichen kann. Hohe Verankerungswerte werden auch beim Einsatz in harten Aufnahmematerialien selbst bei dynamischer Belastung beibehalten, da der axial gestauchte Wendelkörper durch dessen konstruktiv bedingtes Verformungsverhalten unter bleibender radialer Spannung seine Spreizposition im Dübelkörper beibehält.

Als herstellungstechnisch besonders einfach erweist sich ein Wendelkörper mit einem Gang, der sich im wesentlichen über den gesamten Umfang der Zentralbohrung erstreckt. Ebenso kann der Wendelkörper aus mehreren aneinandergereihten Gängen, die sich über den ganzen Umfang der Zentralbohrung erstrecken, bestehen. Der Vorteil einer solchen Ausführungsform ist die radiale Weitbarkeit des Dübelkörpers über einen axial relativ langen Abschnitt.

Nach einem weiteren Vorschlag der Erfindung ist der Wendelkörper aus zwei Wendelteilen mit sich im wesentlichen über je eine Hälfte des Umfanges der Zentralbohrung erstreckenden Gängen mit zueinander gegenläufiger Steigung gebildet. Die Wendelteile sind zweckmässig beispielsweise über ein Brückenglied miteinander zu einer Einheit verbunden. Der Vorteil von zwei oder gegebenenfalls auch mehreren Wendelteilen ist der achssymmetrische Angriff der Stauchkräfte am Wendelkörper, was von Anbeginn des Stauchvorganges an eine gleichmässige Verteilung der die Weitung des Dübelkörpers bewirkenden Radialkräfte auf den Umfang der Zentralbohrung gewährleistet.

Eine Verankerung möglichst nahe dem Grund des Bohrloches wird sichergestellt, indem die Wendelteile sich nur mit einem Gang über je eine Hälfte des Umfanges der Zentralbohrung erstrecken. Wird hingegen ein Verankerungsangriff über einen längeren axialen Abschnitt des Dübelkörpers gefordert, so weist in Weiterbildung der Erfindung jeder Wendelteil zumindest zwei aneinandergereihte Gänge mit zueinander gegenläufiger Steigung auf.

Eine gleichmässige Verteilung der auf den Umfang der Zentralbohrung wirkenden Weitungskräfte ist im besonderen nach einem weiteren Vorschlag der Erfindung erzielbar, indem jeder Wendelteil aus sich kreuzenden, sich im wesentlichen über je eine Hälfte des Umfanges der Zentralbohrung erstreckenden Gängen mit zueinander gegenläufiger Steigung gebildet ist. Jeder Wendelteil kann dabei zur Verteilung der radialen Weitungskräfte auf einen axial längeren Abschnitt des Dübelkörpers aus zwei oder mehreren axial hintereinander angeordneten, sich kreuz enden Gängen bestehen

Die Wandstärke des Wendelkörpers entspricht vorzugsweise im wesentlichen der Wandstärke des Dübelkörpers. Insbesondere wirtschaftliche Erwägungen sprechen für diese Ausgestaltung.

Wirtschaftliche und handhabungstechnische Vorteile sind aber auch erzielbar, wenn nach einem weiteren Vorschlag der Erfindung der Wendelkörper mit dem Dübelkörper einteilig ausgebildet ist. Der Spreizdübel lässt sich so im Stanz-/Biegeverfahren herstellen. Dank der einteiligen Ausbildung von Dübelkörper und Wendelkörper ist das Problem des Festlegens des letzteren im Dübelkörper bzw. die Gefahr des Verlustes des Wendelkörpers nicht gegeben. Ferner erlaubt die einteilige Ausbildung den Einsatz des Spreizdübels auch in sogenannten Durchgangsbohrungen, sofern der Dübelkörper über Mittel zur axialen Abstützung am Aufnahmematerial verfügt.

Die Erfindung wird nachstehend anhand von Zeichnungen, die Ausführungsbeispiele erfindungsgemässer Spreizdübel wiedergeben, näher erläutert. Es zeigen:

Fig. 1 einen Spreizdübel im Längsschnitt;

Fig. 2 einen Grundriss des Spreizdübels nach Fig. 1;

Fig. 3 einen Schnitt durch den Spreizdübel nach Fig. 1, gemäss Schnittverlauf III-III;

Fig. 4 eine Abwicklung des einteilig hergestellten Spreizdübels nach Fig. 1;

Fig. 5 eine weitere Ausführungsform eines Spreizdübels im Längsschnitt;

Fig. 6 einen Schnitt durch den Spreizdübel nach Fig. 5, gemäss Schnittverlauf VI-VI;

Fig. 7 eine Abwicklung des einteilig hergestellten Spreizdübels nach Fig. 5;

Fig. 8 eine weitere Ausführungsform eines Spreizdübels im Längsschnitt;

Fig. 9 eine Abwicklung des einteilig hergestellten Spreizdübels nach Fig. 8;

Fig. 10 eine weitere Ausführungsform eines Spreizdübels im Längsschnitt, in ungespreizter Stellung;

Fig. 11 den Spreizdübel nach Fig. 10 im Längsschnitt, in einem Aufnahmematerial verspreizt;

Fig. 12 eine Abwicklung des einteilig hergestellten Spreizdübels nach Fig. 10 bzw. 11.

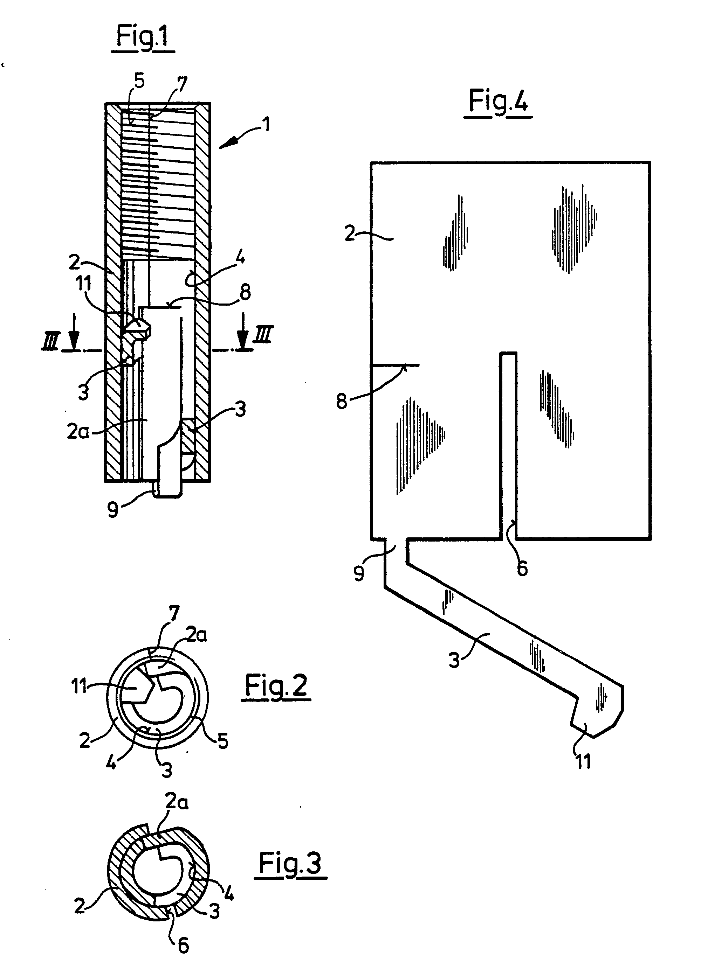

Der in Fig. 1 insgesamt mit 1 bezeichnete Spreizdübel besteht aus einem Dübelkörper 2 und einem diesem einteilig zugeordneten Wendelkörper 3 als Spreizelement.

Der Dübelkörper 2 ist, wie die Fig. 2 weiter verdeutlicht, als gerollte Blechhülse ausgebildet, deren Zentralbohrung 4 im der Einführrichtung abgewandten Abschnitt mit einer dem Lastangriff dienenden Innengewinde 5 versehen ist. Von der einführrichtungsseitigen Stirnfläche her ist der Dübelkörper 2 durch einen axial begrenzten Längsschlitz 6 - siehe Fig. 3 - einerseits und durch die sich über die gesamte Länge des Dübelkörpers 2 erstreckende herstellungsbedingt sich ergebende Stossfuge 7 andererseits in halbschalenförmige Segmente unterteilt. Die eine zur Stossfuge 7 weisende Randzone 2a des Dübelkörpers 2 ist, wie die Fig. 3 verdeutlicht, teilweise in die Zentralbohrung 4 eingebogen. Die axiale Erstreckung der Einbiegung ist durch einen quer zur Hauptachse des Dübelkörpers 2 sich erstreckenden Einschnitt 8 begrenzt (Fig. 1).

Der Wendelkörper 3 ist über einen Steg 9 an das einführrichtungsseitige Stirnende des Döbelkörpers 2 angebunden und erstreckt sich mit einem Gang im wesentlichen über den gesamten Umfang der Zentralbohrung 4. Das freie Ende des Wendelkörpers 3 weist einen Schlagansatz 11 in Form einer zum Zentrum der Zentralbohrung 4 weisenden Abkröpfung auf. Durch axiales Beaufschlagen des Schlagansatzes 11 ist der Wendelkörper 3 unter Verkleinerung dessen Steigung axial stauchbar, wodurch es zur radialen Erweiterung des Döbelkörpers 2 im Bereich der Axialerstreckung des Längsschlitzes 6 und damit zur Verankerung des Spreizdübels 1 in einem Aufnahmematerial kommt.

Die der Fig. 4 entnehmbare Abwicklung des Spreizdübels zeigt im einzelnen die rechteckige Ausgangsform des Dübelkörpers 2, den Längsschlitz 6, den Einschnitt 8, den streifenförmigen Wendelkörper 3 mit Steg 9 und Schlagansatz 11.

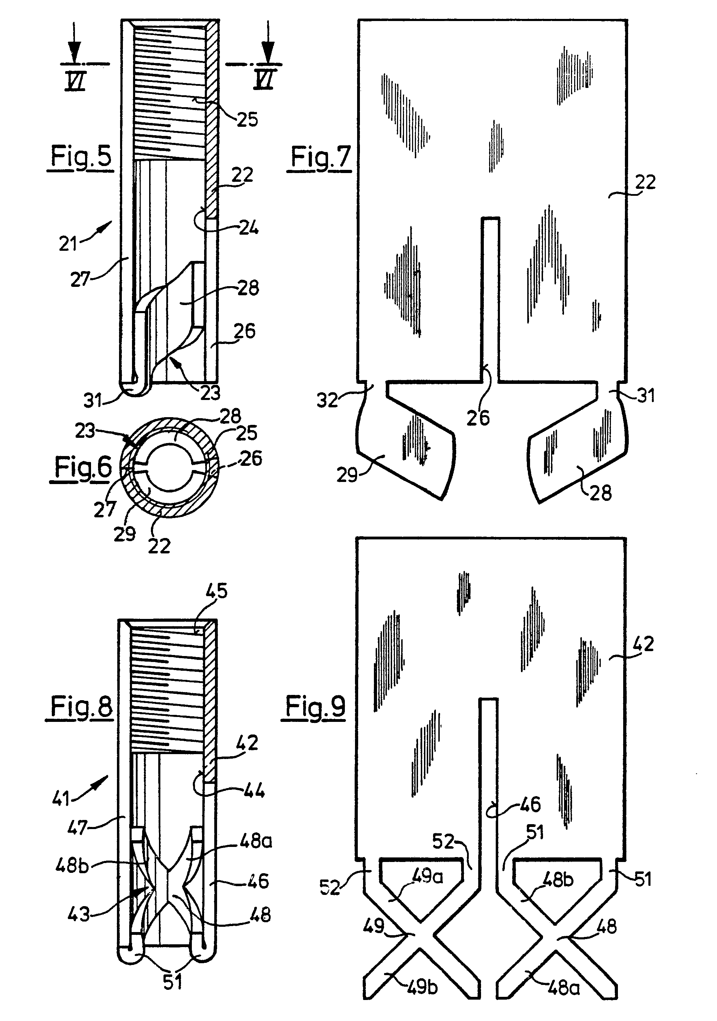

Der insgesamt mit 21 bezeichnete Spreizdübel nach Fig. 5 besteht wiederum aus einem büchsenförmigen Dübelkörper 22 und einem insgesamt mit 23 bezeichneten Wendelkörper. Die Zentralbohrung 24 trägt ein Innengewinde 25, das vor oder nach dem Rollen des Dübelkörpers 22 geformt werden kann. Durch einen Längsschlitz 26 und eine durchgehende Stossfuge 27 ist der Dübelkörper 22 im einführrichtungsseitigen Abschnitt wiederum in zwei halbschalenförmige Segmente geteilt.

Wie der Fig. 6 zu entnehmen ist, besteht der Wendelkörper 23 aus zwei Wendelteilen 28, 29, deren jeder über einen Steg 31, 32 einstückig stirnseitig am Dübelkörper 22 angebunden ist. Jeder der Wendelteile 28, 29 besteht aus einem sich im wesentlichen über eine Hälfte des Umfanges der Zentralbohrung 24 erstreckenden Gang, wobei die Gänge zueinander gegenläufige Steigung aufweisen.

Die Abwicklung nach Fig. 7 zeigt im einzelnen wiederum die rechteckige Ausgangsform des Dübelkörpers 22, den Längsschlitz 26, die Wendelteile 28, 29 sowie die Stege 31, 32.

Der insgesamt mit 41 bezeichnete Spreizdübel nach Fig. 8 setzt sich wiederum aus einem Dübelkörper 42 und einem insgesamt mit 43 bezeichneten Wendelkörper zusammen. Die Zentralbohrung 44 des Dübelkörpers 42 trägt ein Innengewinde 45. Von der vorderen Stirnseite her ragt in den Dübelkörper 42 ein Längsschlitz 46 ein, der zusammen mit der sich herstellungsbedingt ergebenden Stossfuge 47 den Dübelkörper 42 im einführrichtungsseitigen Abschnitt in zwei halbschalenförmige Segmente teilt.

Der Wendelkörper 43 besteht aus zwei Wendelteilen 48, 49, die über Stege 51, 52 an den Dübelkörper 42 einstückig angebunden sind. Jeder Wendelteil 48, 49 besteht aus zwei sich kreuzenden Gängen 48a, 48b bzw. 49a, 49b mit gegenläufiger Steigung, deren jeder sich im wesentlichen über eine Hälfte des Umfanges der Zentralbohrung 44 erstreckt.

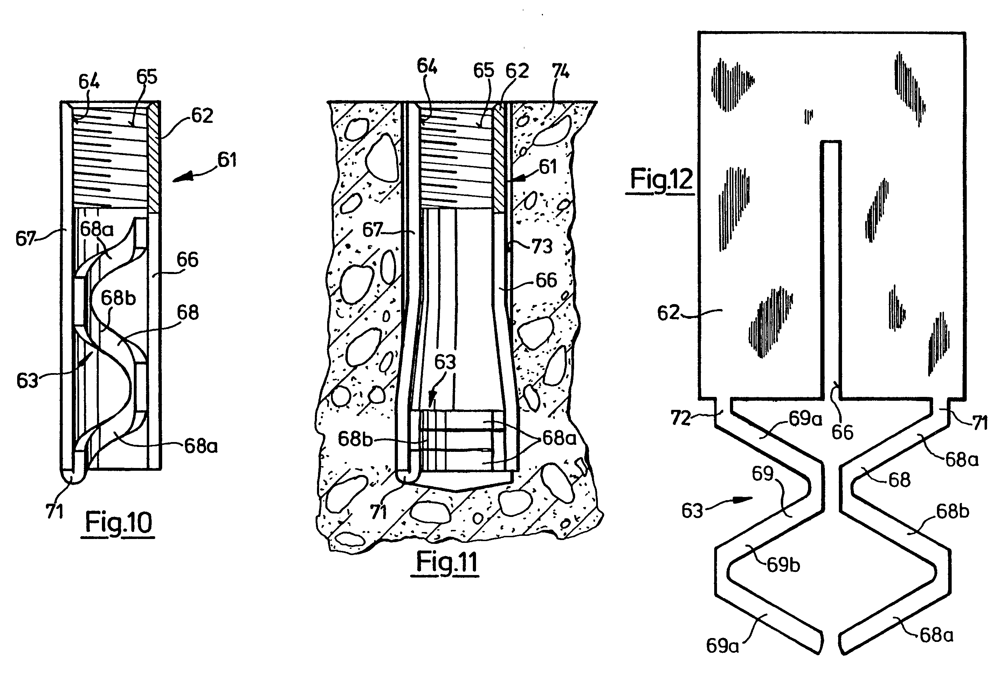

Die Abwicklung nach Fig. 9 zeigt im einzelnen die rechteckige Ausgangsform des Dübelkörpers 42, den Längsschlitz 46, die beiden Wendelteile 48, 49 mit den sich kreuzenden Gängen 48a, 48b bzw. 49a, 49b.

Zur Verankerung der Spreizdübel 21 und 41 werden die Wendelkörper 23 und 43 durch axiale Beaufschlagung gestaucht, wobei der zum Spreizdübel nach den Fig. 1 bis 4 bereits beschriebene Weitungseffekt auftritt.

Der insgesamt mit 61 bezeichnete Spreizdübel nach Fig. 10 besteht wiederum aus einem Dübelkörper 62 und einem insgesamt mit 63 bezeichneten Wendelkörper. Die Zentralbohrung 64 des Dübelkörpers 62 trägt ein Innengewinde 65. Von der einführrichtungsseitigen Stirnfläche her ist der Dübelkörper 62 einerseits durch einen Längsschlitz 66 und andererseits durch eine Stossfuge 67 in halbschalenförmige Segmente geteilt.

Der Wendelkörper 63 besteht aus zwei Wendelteilen 68, 69, deren jeder sich aus mehreren aneinander gereihten Gängen 68a, 68b bzw. 69a, 69b mit zueinander gegenläufiger Steigung zusammensetzt. Die Wendelteile 68, 69 sind über Stege 71, 72 einstückig mit dem Dübelkörper 62 verbunden.

Zur Verankerung des Spreizdübels 61 wird dieser in ein vorgefertigtes Bohrloch 73 eines Aufnahmematerials 74, wie beispielsweise Beton, bis zum Auflaufen der Stege 71, 72 am Grund des Bohrloches 73 eingeschoben. Anschliessend wird der Wendelkörper 63 durch Vortreiben eines im wesentlichen stiftförmigen Werkzeuges in der Zentralbohrung 64 in die der Fig. 11 entnehmbare axial gestauchte Form gebracht. Das axiale Stauchen des Wendelkörpers 63 führt zu dessen radialer Weitung, wodurch der Dübelkörper 62 im beidseitig längsgeschlitzten Bereich im Bohrloch 73 verspreizt wird. Nach der Entnahme des Werkzeuges ist der Spreizdübel 61 belastbar.

Die in Fig. 12 dargestellte Abwicklung des Spreizdübels 61 zeigt im einzelnen die rechteckige Ausgangsform des Dübelkörpers 62, den Längsschlitz 66, den Wendelkörper 63 mit den Wendelteilen 68, 69 sowie deren Gänge 68a, 68b bzw. 69a, 69b und die Stege 71, 72.

## Patentansprüche

1. Spreizdübel mit hülsenförmigem Dübelkörper und einem Spreizelement in dessen Zentralbohrung, wobei der Dübelkörper vom einführrichtungsseitigen Ende her Längsschlitze aufweist und durch axiale Verformung des Spreizelementes im Bereich der Längsschlitze radial aufweitbar ist, dadurch gekennzeichnet, dass das Spreizelement als Wendelkörper (3, 23, 43, 63) ausgebildet ist, dessen Steigung sich bei axialer Verformung unter Vergrösserung der Aussenkontur verkleinert.

2. Spreizdübel nach Anspruch 1, dadurch gekennzeichnet, dass der Wendelkörper (3) einen Gang aufweist, der sich im wesentlichen über den gesamten Umfang der Zentralbohrung (4) erstreckt.

3. Spreizdübel nach Anspruch 1, dadurch gekennzeichnet, dass der Wendelkörper (23, 43, 63) aus zwei Wendelteilen (28, 29; 48, 49; 68, 69) mit sich im wesentlichen über je eine Hälfte des Umfanges der Zentralbohrung (24, 44, 64) erstreckenden Gängen (48a, 48b, 49a, 49b; 68a, 68b, 69a, 69b) mit zueinander gegenläufiger Steigung gebildet ist.

4. Spreizdübel nach Anspruch 3, dadurch gekennzeichnet, dass jeder Wendelteil (68, 69) zumindest zwei aufeinanderfolgende Gänge (68a, 68b, 69a, 69b) mit zueinander gegenläufiger Steigung aufweist.

5. Spreizdübel nach Anspruch 3 oder 4, dadurch gekennzeichnet, dass jeder Wendelteil (48, 49) aus sich kreuzenden, sich im wesentlichen über je eine Hälfte des Umfanges der Zentralbohrung (44) erstreckenden Gängen (48a, 48b, 49a, 49b) mit zueinander gegenläufiger Steigung gebildet ist.

6. Spreizdübel nach einem der Ansprüche 1 bis 5, dadurch gekennzeichnet, dass die Wandstärke des Wendelkörpers (3, 23, 43, 63) im wesentlichen der Wandstärke des Döbelkörpers (2, 22, 42, 62) entspricht.

7. Spreizdübel nach einem der Ansprüche 1 bis 6, dadurch gekennzeichnet, dass der Wendelkörper (3, 23, 43, 63) mit dem Dübelkörper (2, 22, 42, 62) einteilig ausgebildet ist.

## Claims

1. Expansion dowel having a sleeve-shaped dowel body and an expansion element in the central bore thereof, in which respect the dowel body has, from the introduction-direction-side end, longitudinal slots and is radially expansible by axial deformation of the expansion element in the region of the longitudinal slots, characterised in that the expansion element is designed as a helical body (3, 23, 43, 63) the pitch of which reduces upon axial deformation along with enlargement of the outer contour.

2. Expansion dowel according to claim 1, characterised in that the helical body (3) has a turn which extends substantially over the entire circumference of the central bore (4).

3. Expansion dowel according to claim 1, characterised in that the helical body (23, 43, 63) is formed from two helical parts (28, 29; 48, 49; 68, 69) having turns (48a, 48b, 49a, 49b; 68a, 68b, 69a, 69b) of mutually oppositely-directed pitch which extend substantially over one half each of the circumference of the central bore (24, 44, 64).

4. Expansion dowel according to claim 3, characterised in that each helical part (68, 69) has at least two consecutive turns (68a, 68b, 69a, 69b) of mutually oppositely-directed pitch.

5. Expansion dowel according to claim 3 or 4, characterised in that each helical part (48, 49) is formed from intersecting turns (48a, 48b, 49a, 49b) of mutually oppositely-directed pitch which extend substantially over one half each of the circumference of the central bore (44).

6. Expansion dowel according to one of claims 1 to 5, characterised in that the wall thickness of the helical body (3, 23, 43, 63) corresponds substantially to the wall thickness of the dowel body (2, 22, 42, 62).

7. Expansion dowel according to one of claims 1 to 6, characterised in that the helical body (3, 23, 43, 63) is fashioned in one piece with the dowel body (2, 22, 42, 62).

## Revendications

1. Cheville à écartement avec un corps de cheville en forme de douille et un élément d'écartement dans l'alésage central de celle-ci, le corps de cheville présentant, à partir de l'extrémité du côté introduction, des fentes longitudinales et pouvant être écartées radialement par la déformation axiale de l'élément d'écartement dans la région des fentes longitudinales, caractérisée en ce que l'élément d'écartement est conformé en hélice (3, 23, 43, 63) dont le pas diminue lors de la déformation axiale avec agrandissement du contour extérieur.

2. Cheville à écartement selon la revendication 1, caractérisée en ce que l'hélice (3) présente une spire qui s'étend essentiellement sur l'ensemble de la circonférence de l'alésage central (4).

3. Cheville à écartement selon la revendication 1, caractérisée en ce que l'hélice (23, 43, 63) est composée de deux éléments d'hélice (28, 29; 48, 49; 68, 69) avec des spires (48a, 48b, 49a, 49b; 68a, 68b, 69a, 69b) à pas opposé qui s'étendent essentiellement sur respectivement une moitié de la circonférence de l'alésage central (24, 44, 64).

4. Cheville à écartement selon la revendication 3, caractérisée en ce que chaque élément d'hélice (68, 69) présente au moins deux spires consécutives (68a, 68b, 69a, 69b) avec pas opposé.

5. Cheville à écartement selon l'une des revendications 3 ou 4, caractérisée en ce que chaque élément d'hélice (48, 49) est conformé à partir de spires (48a, 48b, 49a, 49h) à pas opposé qui se croisent et s'étendent essentiellement sur respectivement une moitié de la circonférence de l'alésage central (44).

6. Cheville à écartement selon l'une quelconque des revendications 1 à 5, caractérisée en ce que l'épaisseur de paroi de l'élément d'hélice (3, 23, 43, 63) correspond essentiellement à l'épaisseur de paroi du corps de cheville (2, 22, 42, 62).

7. Cheville à écartement selon l'une quelconque des revendications 1 à 6, caractérisée en ce que l'élément d'hélice (3, 23, 43, 63) est conformé en une seule pièce avec le corps de cheville (2, 22, 42, 62).

## Fig.1

## Fig.4

## Fig.2

## Fig.3

Fig.5

Fig.6

Fig.7

Fig.8

Fig.9

Fig.10

Fig.11

Fig.12

0171354